# EUROPEAN PATENT APPLICATION

(11) **EP 2 987 992 A2**
(43) Date of publication of application: **24.02.2016**
(21) Application number: 15178917.9
(22) Date of filing: 29.07.2015
(51) Int. Cl.: F02K 3/06, F01D 5/14

(54) **COMPOSITE FAN BLADE**

(30) Priority: 04.08.2014 US 201462032922 P
(71) Applicant: United Technologies Corporation, Hartford, CT 06103 (US)
(72) Inventor: TURNER, Matthew A., Wallingford, CT Connecticut 06492 (US)
(74) Representative: Leckey, David Herbert

(57) **Abstract**

A composite fan blade (60) for a gas turbine engine (20) is disclosed. The fan blade (60) may include a core (84) being made of a first material and a shell (86) enclosing the core (84). The shell (86) may be made of a second material and the second material may have less plasticity than the first material.

## Description

### Field of the Disclosure

This disclosure generally relates to fan blades for use in gas turbine engines, and more specifically relates to composite fan blades having a core of a first material enclosed by a shell of a second material.

### Background of the Disclosure

Gas turbine engines are well known piece of turbo machinery typically used to provide thrust to an aircraft or to provide power for land-based operations. Generally speaking, a gas turbine engine includes a fan, a compressor, a combustor and a turbine arranged in an axial fashion. The fan draws in ambient air as it rotates and moves it to the compressor where the air is compressed or pressurized. The compressed air is then transferred to the combustor where it is mixed with fuel and ignited. The products of the combustion are hot gases which are then directed into the turbine. This causes the airfoils in the turbine to rotate, and as turbine is mounted on the same shaft, or shafts, as the compressor and fan, this causes the compressor and fan to rotate as well. Accordingly, once started, it can be seen that the operation of the engine is self-sustaining in that the combustion of more fuel causes more rotation of the turbine and in turn the compressor and the fan. Moreover, the rotation of the fan, which typically has a diameter many times that of the compressor and the turbine, causes the engine to generate thrust.

While effective and widely used, a problem with conventional fan blades is that they are solid and relatively heavy due to their mass and size. The gas turbine engines to which these blades are connected in turn require that a rotor disk to which the blades are attached be sufficiently strong to carry the operational loads of the fan blades. This means increasing the strength of the rotor disk by increasing its mass. This in turn leads to increased fuel consumption and, by corollary, decreased engine efficiency.

One way to reduce fan blade weight, and associated rotor disk mass, is to manufacture them not from a single solid material, but rather to utilize two or more dissimilar materials (i.e., composite). While composite fan blades reduce weight, they must also have appropriate strength to resist foreign object damage. Foreign object damage is a constant concern of the aerospace industry, as any impingement of ice, water, sand, dirt, animals (e.g., birds) and other foreign objects found in the air or on the ramps, taxiways and runways of airports can damage the fan blades of the engine and in turn detrimentally affect engine operation. Moreover, if met with significant impact, composite fan blades must have sufficient strength and structural integrity to resist fracture and liberation from the engine during exposure to foreign objects.

While certain composite fan blades are known, improvements in the aforementioned areas of mass and resilience to foreign object damage are desired.

### Summary of the Disclosure

In accordance with one aspect of the present disclosure, a composite fan blade for a gas turbine engine is disclosed. The fan blade may have a core comprising a first material and a shell enclosing the core. The shell may be comprised of a second material having less plasticity than the first material.

In a refinement, the first material of the composite fan blade is selected from the group consisting of metallic foam, ceramic foam, polyurethane foam, polystyrene, blown polystyrene, nylon fiber, aramid fiber, glass fiber, silicone, polypropylene, polypropylene fibers, polyethylene, polyethylene fibers, hydrogel, aerogel, xerogel, organogel and combinations thereof.

In another refinement, the metallic foam of the composite fan blade is selected from the group consisting of aluminum foam, aluminum alloy foam, nickel foam, nickel alloy foam, titanium foam, titanium alloy foam and combinations thereof.

In another refinement, the aramid fiber of the composite fan blade is selected from the group consisting of para-aramid fiber, meta-aramid fiber and combinations thereof.

In another refinement, the silicone of the composite fan blade is selected from the group consisting of silicone fluid, silicone elastomer, silicone gel, silicone resin and combinations thereof.

In another refinement, the second material of the composite fan blade is selected from the group consisting of carbon-fiber, steel, titanium, titanium alloy, nickel, nickel alloy, ceramic, poly(p-phenylene-2,6-benzobisoxazole) fiber, mullite fiber, alumina fiber, silicon nitride fiber, silicon carbide fiber, boron fiber, boron nitride fiber, boron carbide fiber, glass fiber, titanium diboride fibers, yttria stabilized zirconium fiber and combinations thereof.

In another refinement, the carbon-fiber of the composite fan blade is selected from the group consisting of woven carbon-fiber, unidirectional carbon-fiber and combinations thereof.

In another refinement, the first material is para-aramid fiber and the second material is a carbon-fiber.

In accordance with another aspect of the present disclosure a gas turbine engine is disclosed. The gas turbine engine may have a compressor, a combustor downstream of the compressor, a turbine downstream of the combustor and a fan upstream of the compressor. The fan may include a plurality of composite fan blades. Each composite fan blade may include a core being made of a first material and a shell enclosing the core. The shell may be made of a second material having less plasticity than the first material.

In a refinement, the first material of the composite fan blade of the gas turbine engine is selected from the group consisting of metallic foam, ceramic foam, polyurethane foam, polystyrene, blown polystyrene, nylon fiber, aramid fiber, glass fiber, silicone, polypropylene, polypropylene fibers, polyethylene, polyethylene fibers, hydrogel, aerogel, xerogel, organogel and combinations thereof.

In another refinement, the metallic foam of the composite fan blade of the gas turbine engine is selected from the group consisting of aluminum foam, aluminum alloy foam, nickel foam, nickel alloy foam, titanium foam, titanium alloy foam and combinations thereof.

In another refinement, the aramid fiber of the composite fan blade of the gas turbine engine is selected from the group consisting of para-aramid fiber, meta-aramid fiber and combinations thereof.

In another refinement, the silicone of the composite fan blade of the gas turbine engine is selected from the group consisting of silicone fluid, silicone elastomer, silicone gel, silicone resin and combinations thereof.

In another refinement, the second material of the composite fan blade of the gas turbine engine is selected from the group consisting of carbon-fiber, steel, titanium, titanium alloy, nickel, nickel alloy, ceramic, poly(p-phenylene-2,6-benzobisoxazole) fiber, mullite fiber, alumina fiber, silicon nitride fiber, silicon carbide fiber, boron fiber, boron nitride fiber, boron carbide fiber, glass fiber, titanium diboride fibers, yttria stabilized zirconium fiber and combinations thereof.

In another refinement, the carbon-fiber of the composite fan blade of the gas turbine engine is selected from the group consisting of woven carbon-fiber, unidirectional carbon-fiber and combinations thereof.

In another refinement of the composite fan blade of the gas turbine engine, the first material is para-aramid fiber and the second material is a carbon-fiber.

In accordance with another aspect of the present disclosure a method of manufacturing a composite fan blade is disclosed. The method may comprise the steps of forming a first material into a core, then enclosing the core with the second material to form a blade-precursor having a core and a shell surrounding the core. Subsequently, the blade-precursor may be cured to form the composite fan blade.

In a refinement of the method of manufacturing a composite fan blade, the first material is selected from the group consisting of metallic foam, ceramic foam, polyurethane foam, polystyrene, blown polystyrene, nylon fiber, aramid fiber, glass fiber, silicone, polypropylene, polypropylene fibers, polyethylene, polyethylene fibers, hydrogel, aerogel, xerogel, organogel and combinations thereof.

In another refinement of the method of manufacturing a composite fan blade, the second material is selected from the group consisting of carbon-fiber, steel, titanium, titanium alloy, nickel, nickel alloy, ceramic, poly(p-phenylene-2,6-benzobisoxazole) fiber, mullite fiber, alumina fiber, silicon nitride fiber, silicon carbide fiber, boron fiber, boron nitride fiber, boron carbide fiber, glass fiber, titanium diboride fibers, yttria stabilized zirconium fiber and combinations thereof.

In another refinement of the method of manufacturing a composite fan blade, the first material is para-aramid fiber and the second material is carbon-fiber.

These and other aspects and features of the present disclosure will be more readily understood when read in conjunction with the accompanying drawings.

### Brief Description of the Drawings

FIG. 1 is a side, partially cross-sectional view of a gas turbine engine constructed in accordance with the present disclosure.
FIG. 2 is a perspective view of a gas turbine engine fan blade assembly found in a fan section of FIG. 1.
FIG. 3 is a perspective view of a fan blade found in the fan blade assembly of FIG. 2.
FIG. 4 is a cross-sectional view of the fan blade shown in FIG. 3 taken along the line 3-3.
FIG. 5 is a flowchart depicting a sample sequence of steps which may be practiced in accordance with a method of manufacturing a fan blade of the present disclosure.

### Detailed Description

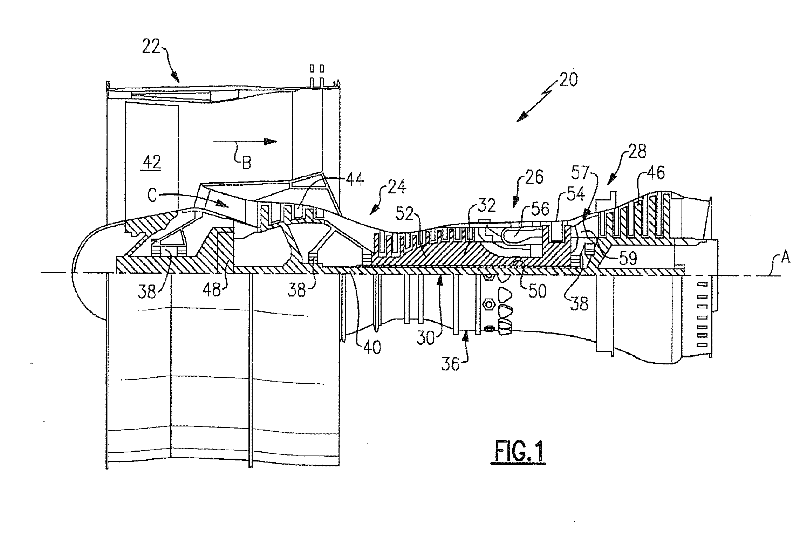

Referring now to the drawings, and with specific reference to FIG. 1, a gas turbine engine is shown and generally referred to be reference numeral 20. The gas turbine engine 20 disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath B, while the compressor section 24 drives air along a core flowpath C for compression and communication into the combustor section 26. As will be described in further detail herein, in the combustion section 26, the compressor air is mixed with fuel and ignited, with the resulting combustion gases then expanding in turbine section 28. Although depicted as a turbofan gas turbine engine in the disclosed non-limiting embodiment, it should be understood that the concepts described herein are not limited to use with turbofans as the teachings may be applied to other types of turbine engines including, but not limited to, three-spool architectures as well.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan blade assembly 42, a low pressure (or first) compressor section 44 and a low pressure (or first) turbine section 46. The inner shaft 40 is connected to the fan blade assembly 42 through a geared architecture 48 to drive the fan assembly 42 at a lower speed than the low speed spool 30. The high speed spool 32 includes an outer shaft 50 that interconnects a high pressure (or second) compressor section 52 and high pressure (or second) turbine section 54. The outer shaft 50 is typically concentric with and radially outward from the inner shaft 50. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 supports one or more bearing systems 38 in the turbine section 28. The inner shaft 40 and the outer shaft 50 are concentric and rotate via bearing systems 38 about the engine central longitudinal axis A, which is collinear with their longitudinal axes. As used herein, a "high pressure" compressor or turbine experiences a higher pressure than a corresponding "low pressure" compressor or turbine.

The core airflow C is compressed first by the low pressure compressor 44, and then by the high pressure compressor 52, before being mixed and burned with fuel in the combustor 56, and lastly expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion.

The engine 20 in one example is a high-bypass geared aircraft engine. In a high-bypass engine a greater volume of air moves along a bypass flowpath B than through core airflow C. The ratio of the mass of air moving through bypass flowpath B to core airflow C is known as the bypass ratio. In a further example, the engine 20 bypass ratio is greater than about six (6), with an example embodiment being greater than ten (10), the geared architecture 48 is an epicyclic gear train, such as a star gear system or other gear system, with a gear reduction ratio of greater than about 2.3 and the low pressure turbine 46 has a pressure ratio that is greater than about 5. In one disclosed embodiment, the engine 20 bypass ratio is greater than about ten (10:1), the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans.

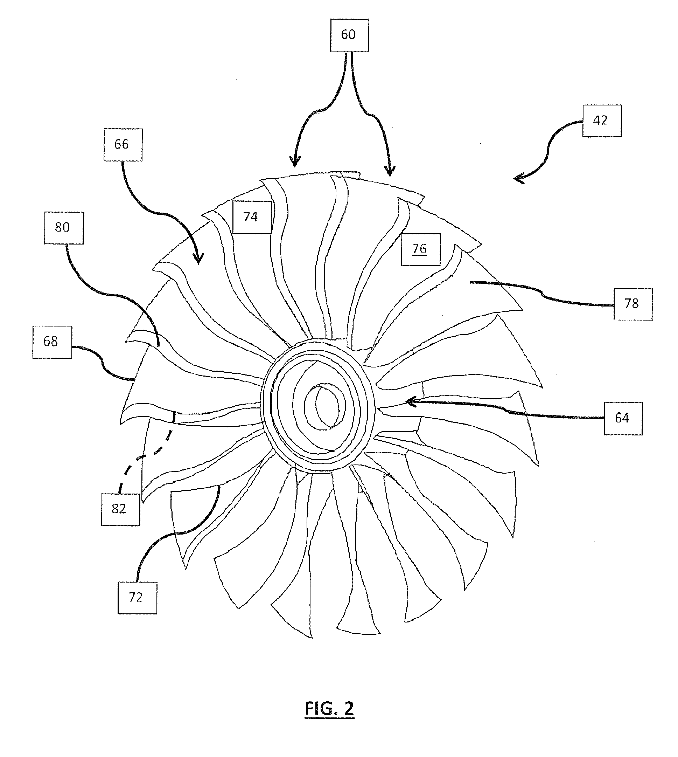

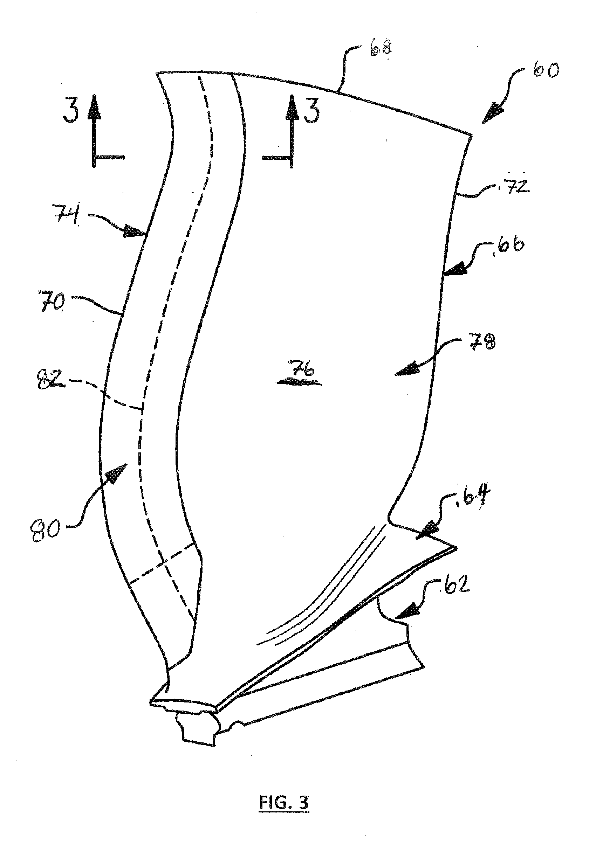

Referring to FIGS. 2 and 3, a fan blade 60 of the fan blade assembly 42 may include a root 62 supporting a platform 64. An airfoil 66 may extend from the platform 64 to a tip 68. The airfoil 66 includes spaced apart leading and trailing edges 70, 72. Pressure and suction sides 74, 76 adjoin the leading and trailing edges 70, 72 to provide a fan blade contour 78. In certain embodiments the fan blade includes a leading edge sheath 80. The sheath 80 is secured to the fan blade 60 over the edge 82. In one example, the sheath 80 is constructed from titanium. In another example, the sheath 80 is made from titanium alloy. It should be understood that other metals or materials may be used for sheath 80.

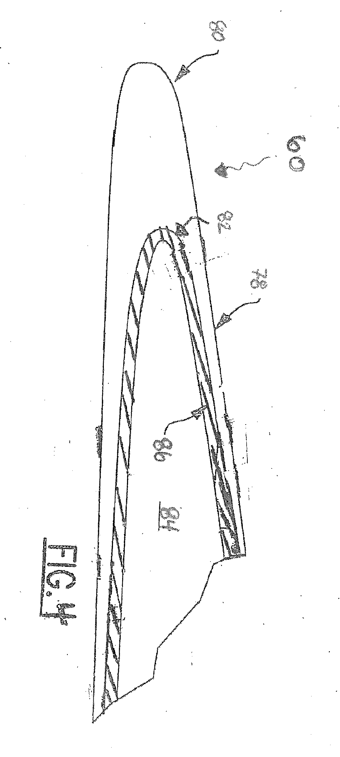

Now with reference to FIGS. 3-4, in one aspect of the present disclosure, the fan blade 60 may include a core 84 of a first material surrounded by a shell 86 of a second material. Although other configurations are possible, in one embodiment the core 84 may extend from the about the tip 68 to about the root 62. Similarly, the core 84 may extend from about the leading edge 70 to about the trailing edge 72. Furthermore, in an additional embodiment, the fan blade may include a second core (not shown) being made of the first material surrounded by the shell 86.

In one embodiment, a second material has less plasticity than the first material. For example, the first material may be aramid fiber and the second material may be carbon-fiber. However, the aforementioned choice of a first material and a second material is not meant to be limiting. Consequently, a first material may be selected from the group consisting of metallic foam, ceramic foam, polyurethane foam, polystyrene, blown polystyrene, nylon fiber, glass fiber, silicone, polypropylene, polypropylene fibers, polyethylene, polyethylene fibers, hydrogel, aerogel, xerogel, and organogel. Even more, a first material need not be made only of from one of these afore mentioned materials. As such, a first material may be made from the combination of any of the foregoing.

Furthermore, since there are multiple types of metallic foams, the choice of metallic foam is not meant to be limiting. Thus, metallic foam may be selected from the group comprising aluminum foam, aluminum alloy foam, nickel foam, nickel alloy foam, titanium foam and titanium alloy foam. Secondly, as would be understood by persons of skill in the art, a first material may be made from one or more of the above mentioned metallic foams.

Just as there are multiple types of metallic foams, there are also multiple types of aramid fibers. Therefore in additional examples of a first material that may be utilized in the creation of the blade, an aramid fiber may selected from the group consisting of para-aramid fiber (Kevlar®) and meta-aramid fiber (Nomex®). Furthermore, a first material may be made from a combination of both para-aramid fiber and meta-aramid fiber.

Silicone comes in many forms too. Thus, the silicone of a first material may be selected from the group consisting of silicone fluid, silicone elastomer, silicone gel and silicone resin. As would be understood, a first material may also be made of a combination of any two or more of afore mentioned silicones too. The choice of a first material described above, and any combinations thereof, may be chosen by a skilled artisan to provide sufficient strength and structural integrity to the fan blade.

Just as a first material is not limited to aramid fiber, so to a second material is not meant to be limited to only carbon-fiber. In fact, there is no limitation to a second material that may be used. However, preferably the second material has less plasticity than the first material. Thus, in additional examples a second material may be selected from the group comprising steel, titanium, titanium alloy, nickel, nickel alloy, ceramic, poly(p-phenylene-2,6-benzobisoxazole) fiber, mullite fiber, alumina fiber, silicon nitride fiber, silicon carbide fiber, boron fiber, boron nitride fiber, boron carbide fiber, glass fiber, titanium diboride fibers, yttria stabilized zirconium fiber, or any combination thereof. Furthermore, as would be understood by persons of skill in the art, a second material may be made from the combination of two or more of any of the foregoing. Additionally, and in a further example, a carbon-fiber may be selected from the group comprising woven carbon-fiber, unidirectional carbon-fiber or any combination thereof. As would be understood by persons of ordinary skill in the art, the second material may be made from combinations of any two or more of the foregoing. The choice of a second material described above, and any combinations thereof, may be chosen to provide sufficient strength and structural integrity to the fan blade in combination with a first material.

Referring again to FIGS. 3-4, the thickness of core 84 may vary based on its position between the tip 68 and the platform 64 and the leading edge 70 and trailing edge 72. Thus, in an example the core may be between about 0.001 inches thick and 3 inches thick. In a further example, the core may be between about 0.01 inches thick and about 2 inches thick. In a still further example, the core may be between about 0.1 inches thick and about 2 inches thick. The thickness of the core may positionally vary to provide appropriate absorptive capability to the blade upon exposure to foreign objects, while still providing appropriate strength to carry the operational load of the blade. The appropriate thickness of the core may be determined using computer software modeling and then confirmed with a test complying with Federal Aviation Regulations (FARs), 14 C.F.R., Subpart E and/or its European Aviation Safety Agency (EASA) equivalents.

The thickness of the shell 86 may also vary based on its position between the tip 68 and the platform 64 and the leading edge 70 and trailing edge 72. Thus, in one example the shell is between about 0.001 inches thick and 3 inches thick. In a further example, the shell is between about 0.01 inches thick and about 2 inches thick. In a still further example, the shell is between about 0.1 inches thick and about 2 inches thick. The thickness of the shell may positionally vary to provide appropriate slicing capability to the blade upon exposure to foreign objects, while still providing the appropriate strength to carry the operational load of the blade. Analogous to the core thickness, the appropriate thickness of the shell may be modeled with computer software and subsequently confirmed with a test complying with FARs, 14 C.F.R., Subpart E and/or its EASA equivalents. Moreover, a completed blade 27 having a core and a shell with varying thickness may be modeled with computer software and subsequently confirmed with a test complying with FARs, 14 C.F.R., Subpart E and/or its EASA equivalents.

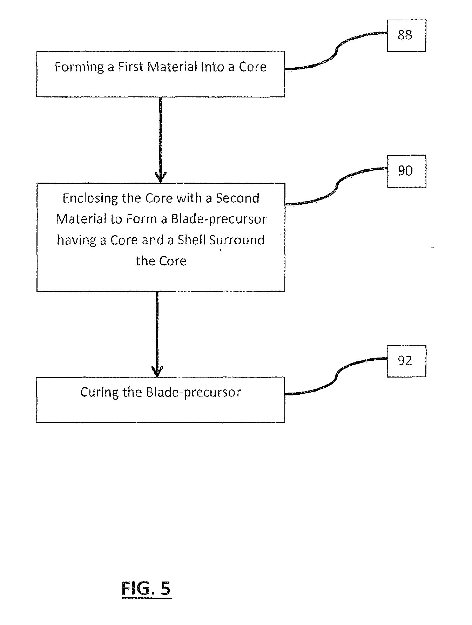

While the foregoing describes a gas turbine engine 20 and a fan blade 60, the present disclosure also recites a method for making a composite fan blade for a gas turbine engine. An exemplary embodiment of the method is depicted in the flowchart of FIG. 5. As shown in this chart, the method may include a first step 88 of forming a first material into a core. Then, in a second step 90, the core may be enclosed with a second material to form a blade precursor. The blade-precursor may have a core and a shell surrounding the core. Then, in additional step 92, the blade-precursor may be cured.

With continued reference to FIG. 5, the core may be shaped into an airfoil shape. However, in an alternative example, the core may not have any airfoil shape, and instead the shell may have an airfoil shape. Whether the core or shell has an airfoil shape may be dependent on many variables such as, but not limited to, the thickness of the blade, the first material used, and the second material used. Thus, if the blade is towards its lower thickness limit, then the core may not be in an airfoil shape, and instead the shell may be relied upon to provide an airfoil shape. Moreover, whether the core is an airfoil shape may be dependent on the results of the computer modeling discussed above for a particular combination of first material and second material. Thus, the core of a fan blade having a para-aramid core may be in the shape of an airfoil to provide the necessary absorptive capability while still providing appropriate strength to carry the operational load of the blade when utilized in combination with a carbon-fiber shell.

Moreover, the first material may include a first matrix, and the second material may include a second matrix. The matrices may be utilized to act as a binder for the first material and second material. The first and second matrices that may be used include, but are not limited to, epoxy resin, phenolic resin, polyimide resin, polyamide resin, polypropylene resin and polyether ether ketone (PEEK) resin. The choice of matrix utilized may be chosen for numerous reasons, but may be selected for the operating temperature of the blade or the necessary strength and structural integrity characteristics necessary for such a composite blade.

Since different matrices have different curing chemistry, and different methods of curing may realize different strength and structural integrity characteristics, the process in the curing step 92 may be selected from the group consisting of air-curing, heat-curing, catalytic curing, UV curing (if an appropriate UV curable material is used) and electron beam curing. Further, since the first matrix used may be different than the second matrix used, the process depicted in the FIG. 5, may include an additional curing step between core forming step 88 and the enclosing step 90. In this instance, the curing processes may be the same or they may be different.

### Industrial Applicability

In operation, the blades of the present disclosure can find operation in many industrial settings, including but not limited to, gas turbine engines for use in aircraft. More specifically, various composite fan blades are disclosed. The fan blades disclosed herein have a core of a first material that is surrounded by a shell of a second material, with the second material having a lower plasticity than the first material. The lower plasticity shell can cut through foreign objects that impinge its surface helping to expel such objects from the engine, while the higher plasticity core material absorbs the energy of an impinging foreign object thereby reducing the likelihood of fracture of the blade and its liberation from engine during foreign object exposure.

## Claims

1. A composite fan blade (60) for a gas turbine engine (20), comprising:
a core (84) being made of a first material; and
a shell (86) enclosing the core (84) being made of a second material, the second material having less plasticity than the first material.

2. The composite fan blade (60) of claim 1, wherein the first material is selected from the group consisting of metallic foam, ceramic foam, polyurethane foam, polystyrene, blown polystyrene, nylon fiber, aramid fiber, glass fiber, silicone, polypropylene, polypropylene fibers, polyethylene, polyethylene fibers, hydrogel, aerogel, xerogel, organogel and combinations thereof.

3. The composite fan blade (60) of claim 2, wherein the metallic foam is selected from the group consisting of aluminum foam, aluminum alloy foam, nickel foam, nickel alloy foam, titanium foam, titanium alloy foam and combinations thereof.

4. The composite fan blade (60) of claim 2 or 3, wherein the aramid fiber is selected from the group consisting of para-aramid fiber, meta-aramid fiber and combinations thereof.

5. The composite fan blade (60) of claim 2, 3 or 4 wherein the silicone is selected from the group consisting of silicone fluid, silicone elastomer, silicone gel, silicone resin and combinations thereof.

6. The composite fan blade (60) of any preceding claim, wherein the second material is selected from the group consisting of carbon-fiber, steel, titanium, titanium alloy, nickel, nickel alloy, ceramic, poly(p-phenylene-2,6-benzobisoxazole) fiber, mullite fiber, alumina fiber, silicon nitride fiber, silicon carbide fiber, boron fiber, boron nitride fiber, boron carbide fiber, glass fiber, titanium diboride fibers, yttria stabilized zirconium fiber and combinations thereof.

7. The composite fan blade (60) of claim 6, wherein the carbon-fiber is selected from the group consisting of woven carbon-fiber, unidirectional carbon-fiber and combinations thereof.

8. The composite fan blade of claim 1, wherein the first material is para-aramid fiber and the second material is carbon-fiber.

9. A gas turbine engine (20), comprising:
a compressor (24);
a combustor (26) downstream of the compressor (24);
a turbine (28) downstream of the combustor (26); and
a fan (42) upstream of the compressor (24), the fan (42) including a plurality of composite fan blades (60), each composite fan blade being a composite fan blade of any preceding claim.

10. A method of manufacturing a composite fan blade (60) for a gas turbine engine (20), comprising:
forming (88) a first material into a core (84);
enclosing (90) the core (84) with a second material to form a blade-precursor having a core (84) and a shell (86) surrounding the core (80); and
curing (92) the blade-precursor.

11. The method of manufacturing a composite fan blade (60) of claim 10, wherein the first material is selected from the group consisting of metallic foam, ceramic foam, polyurethane foam, polystyrene, blown polystyrene, nylon fiber, aramid fiber, glass fiber, silicone, polypropylene, polypropylene fibers, polyethylene, polyethylene fibers, hydrogel, aerogel, xerogel, organogel and combinations thereof.

12. The method of manufacturing a composite fan blade (60) of claim 10 or 11, wherein the second material is selected from the group consisting of carbon-fiber, steel, titanium, titanium alloy, nickel, nickel alloy, ceramic, poly(p-phenylene-2,6-benzobisoxazole) fiber, mullite fiber, alumina fiber, silicon nitride fiber, silicon carbide fiber, boron fiber, boron nitride fiber, boron carbide fiber, glass fiber, titanium diboride fibers, yttria stabilized zirconium fiber and combinations thereof.

13. The method of manufacturing a composite fan blade (60) of claim 10, wherein the first material is para-aramid fiber and the second material is carbon-fiber.
